# EUROPEAN PATENT APPLICATION

(11) **EP 4 206 147 A1**
(43) Date of publication of application: **05.07.2023**
(21) Application number: 21860994.9
(22) Date of filing: 09.07.2021
(51) Int. Cl.: C02F 1/40, E03F 5/14, F16K 15/14

(54) **COMPRESSED AIR EJECTING MECHANISM, AND CONDUIT AND SEDIMENTATION TANK USING SAME**

(30) Priority: 27.08.2020 JP 2020143546; 11.09.2020 JP 2020152897
(71) Applicant: Utsunomiya Kogyo Co., Ltd., Koto-ku Tokyo 136-0071 (JP)
(72) Inventor: UTSUNOMIYA, Hideo, Tokyo 136-0071 (JP)
(74) Representative: Müller-Boré & Partner Patentanwälte PartG mbB
(86) International application number: PCT/JP2021/025906
(87) International publication number: WO 2022/044564

(57) **Abstract**

A compressed air jetting mechanism 10 is provided on side walls 5 in a longitudinal direction inside a conduit body 2 along the longitudinal direction of the conduit body 2 at slightly under scum layer S generated in the conduit body 2, the scum S can be peeled off from the side walls 5 of the conduit body 2 when bubbles jetted out from the compressed air jetting mechanism 10a rise, and a nozzle 8b jetting pressure water out toward an upper surface of the generated scum layer S to promote a flow of the scum layer S to face a scum pit 3 is provided, so that the scum layer S can be promptly discharged to the scum pit 3.

## Description

### BACKGROUND OF THE INVENTION

### Technical Field

The present invention relates to a compressed air jetting mechanism and a conduit using the compressed air jetting mechanism, and a sedimentation basin using the compressed air jetting mechanism.

Priority is claimed on Japanese Patent Application No. 2020-143546 filed August 27, 2020, and Japanese Patent Application No. 2020-152897 filed September 11, 2020, the content of which is incorporated herein with reference.

### Background Art

In a sewage treatment plant, a plurality of sedimentation basins are arranged to be lined up as primary sedimentation basins; each of the sedimentation basins are configured so that raw water is distributed and supplied from one conduit. In the raw water supplied to the conduit, since the raw water is waste water, buoyant substances other than settleable substances which are objects for treating in the sedimental tanks are contained. The buoyant substances are gathered in a certain size and generate scum.

When the raw water is supplied to the conduit and time passes, the scum floats on the water surface of the conduit, and the floating scum gradually increases in thickness to generate a scum layer. When the thickness of the generated scum layer reaches, for example, about 10 cm, the scum is removed. The removal of the scum is performed by a worker scooping up using a dipper, or sucking by a hose of a vacuum car grasped by hands. In order to improve the manual work of the worker to remove the scum, for example, as shown in Patent Literature 1, a scum removal device which automatically removes scum is proposed. The scum removal device of Patent Literature 1 breaks scum generated on the water surface by a mechanism which vertically moves a three-dimensional object, and moves the scum to a scum removal mechanism provided at a terminal end position in a flow direction of the conduit.

The buoyant substances are contained also in the raw water supplied to the sedimental tanks from the conduit, so that the scum removal device removing the generated scum is also provided in the sedimental tanks. That is, the buoyant substances in the raw water flowed into the sedimental tanks float on the water surface and generated the scum layer, and the generated scum layer is removed by the scum removal device provided at a downstream side of a flow of the sedimental tanks. As the scum removal device provided at the sedimental tanks, ones having a pipe-type scum removing mechanism as shown in Patent Literature 2 are known.

In the scum removal device shown in Patent Literature 2, when the scum is discharged, when a part of an opening part provided in a pipe body sinks in the water, a jetting means that jets compressed air upward along a wall surface is provided at the wall surface side where the scum is flowed among the wall surfaces forming the opening part.

In the scum removal device shown in Patent Literature 2, the scum can smoothly flow into the opening part and the whole scum can smoothly move, so that the scum can be immediately discharged; a flow amount of water along with the discharge of the scum can be reduced 1/20 to 1/30 of that in the conventional scum removal device having the pipe-type scum removing mechanism. As described above, since the amount of the water along with the scum which is discharged is remarkably small in comparative with the conventional manner, a cost of equipment of post-processing equipment such as a compression floatation device, a dehydrator and the like is small, power consumption of a storage pump is small, and it can contribute to energy saving; it is practically used with a nickname "Shu-ichi kun" (register trade mark).

Patent Literature 3 proposes an improved version of a jetting device provided on the scum removal device shown in the above-described Patent Literature 2. The jetting device shown in Patent Literature 3 is characterized to be configured from a pipe material communicated with a supply source of compressed air, a bowl-shape body provided on the pipe material so that an opening part faces downward, and a hole part provided on a joint portion between the pipe material and the bowl-shape body to communicate an inside of the pipe material and an inside of the bowl-shape body. Therefore, the hole part is not in contact with sewage (waste water) in a state in which the air is not ejected, and clogging can be effectively prevented. Accordingly, since the air is favorably jetted out, there is an advantage of that the scum flows smoothly into the opening part, and the scum can be immediately discharged.

### Citation List

### Patent Literature

[Patent Literature 1] Japanese Unexamined Patent Application, First Publication No. 11-290847
[Patent Literature 2] Japanese Patent No. 3943551
[Patent Literature 3] Japanese Patent No. 5443122

### SUMMARY OF INVENTION

### Technical Problem

However, the removal of scum which occurs in the conventional conduit is performed by a handwork such as grasping a hose of a vacuum car by a worker, so it is desired that the scum can be removed automatically without manpower. Although it is proposed to move scum mechanically as shown in Patent Literature 1 in order to satisfy such a requirement, not only facilities are large-scale and expensive, but the facilities are provided in a bad environment treating the waste water, so that there is a problem in maintenance of the facilities and equipment, and it is not putted into practice yet.

The scum removal devices of sedimentation basins shown in the above-described Patent Literature 2 and Patent Literature 3 have excellent advantages that the amount of water accompanying with the scum is extremely small comparing with the scum removal device having the conventional pipe-type scum removing mechanism; however, further simplification of the jetting device of the compressed air provided with the pipe body is desired.

The present invention is achieved to satisfy the above requirements, and has an object to provide a compressed air jetting mechanism which can help automatizing of scum removal of the conduit and the sedimentation basin, and a conduit using it, and a sedimentation basin.

### Solution to Problem

A compressed air jetting mechanism according to the present invention has a pipe in which a circumference wall is formed of an elastic material, having at least one slit penetrating the circumference wall, and disposed in water, and a compressed air supply system connected to the pipe to supply compressed air having higher pressure than pressure in water in which the pipe is provided into pipe; and in the mechanism, the slit is closed when the pressure in the pipe is equal to or smaller than the water pressure, and opened when the compressed air is supplied to the pipe.

In the compressed air jetting mechanism, the slit is opened when the compressed air is supplied at a pressure higher than the water pressure from the compressed air supply system into the pipe, and the compressed air is jetted out through the slit into the water. It is a simple structure in which the slit is formed on the pipe made of the elastic material, and it is not easily clogged since inner pressure is applied by the compressed air.

In the compressed air jetting mechanism of the present invention, it is preferable that a plurality of the slits be provided at a predetermined intervals in a longitudinal direction, so that a longitudinal direction thereof is parallel to a longitudinal direction of the pipe.

Since the plurality of the slits are provided with the predetermined intervals with each other parallel to the longitudinal direction of the pipe, this compressed air jetting mechanism can jet the compressed air appropriately without decreasing a strength of the pipe.

A conduit according to the present invention is a conduit distributing and supplying raw water to a sedimentation basin provided with a sewage treatment plant, having a conduit body into which the raw water flows and a compressed air jetting mechanism which is provided along a longitudinal direction of the conduit body that is inside a side wall formed along the longitudinal direction of the conduit body, below a scum layer occurred in the conduit body; and the compressed air jetting mechanism is capable of jetting out compressed air from a plurality of points in the longitudinal direction into water.

This conduit is capable of facilitating tearing scum off from a side wall of the conduit body to smoothly move the scum.

In the conduit according to the present invention, the compressed air jetting mechanism is provided with a pipe in which a circumference wall is formed of an elastic material, having at least one slit penetrating the circumference wall, and a compressed air supply system connected to the pipe to supply compressed air having higher pressure than pressure in water where the pipe is provided into pipe; and the slit is closed when the pressure in the pipe is equal to or smaller than the water pressure, and opened when the compressed air is supplied to the pipe.

In this conduit, by adopting the compressed air jetting mechanism in which the slit is formed in the pipe made of the elastic material, it is difficult to clog the conduit with a simple configuration, and the facility can be simplified.

In the conduit of the present invention, it is preferable that the compressed air jetting mechanism include a pipe in which a circumference wall is formed of a rigid material, having at least one slit penetrating the circumference wall, and a compressed air supply system capable of supplying compressed air having higher pressure than pressure in water where the pipe is provided into the pipe.

By adopting the compressed air jetting mechanism in which a hole is formed in the pipe made of a rigid material, the conduit is excellent in durability.

In the conduit of the present invention, it is preferable that a plurality of the holes are provided at a predetermined intervals with each other in a longitudinal direction of the pipe.

In the conduit of the present invention, a discharge port member may be provided at the hole, and a discharge port member may be formed in a cup shape and provided so that an opening part faces downward and the hole and an inner space of the discharge port member are communicated with each other.

Since the discharge port member has the cup shape, clogs can be effectively prevented.

In the conduit of the present invention, it is preferable that any one of an over-water nozzle jetting pressure water to an upper surface of the scum layer to advance a flow so that the scum layer goes toward a scum pit, or an underwater nozzle jetting pressure water in water to advance a flow so that the scum layer goes toward the scum pit be provided, or with both the nozzles be provided.

By using the over-water nozzle and the like, it is possible to discharge the scum in a short time efficiently.

A sedimentation basin of the present invention is a sedimentation basin having a pipe-type scum removing mechanism provided at a sewage treatment plant; the pipe-system scum removing mechanism has a compressed air jetting mechanism on a wall surface of a pipe body at a side where the scum flows between wall surfaces forming an opening part when a part of the opening part provided on the pipe body is sank in water to remove the scum to jet out the air along the wall surface; the compressed air jetting mechanism is provided with a pipe wherein a circumference wall is formed of an elastic material, having at least one slit penetrating the circumference wall, and a compressed air supply system connected to the pipe to supply compressed air having higher pressure than pressure in water where the pipe is provided into the pipe; and the slit is closed when the pressure in the pipe is equal to or smaller than the water pressure, and opened when the compressed air is supplied to the pipe.

It is a compressed air jetting mechanism in which a slit is formed on a pipe, and easily putted into practice.

### Advantageous Effects of Invention

By a compressed air jetting mechanism having a simple structure mainly composed of a pipe, scum removal in a conduit distributing and supplying raw water to a sedimentation basin provided at a sewage treatment plant can be smoothly performed, and automation thereof can be achieved.

### BRIEF DESCRIPTION OF DRAWINGS

[FIG. 1] It is a plan view of a conduit provided with a compressed air jetting mechanism according to one embodiment of the present invention.
[FIG. 2] It is a cross-sectional view taken along the line X₁-X₁ in FIG. 1.
[FIG. 3] It is an explanation view when scum is removed in the conduit provided with the compressed air jetting mechanism according to one embodiment of the present invention.
[FIG. 4] It is a frontal view of a part of the compressed air jetting mechanism according to one embodiment of the present invention.
[FIG. 5] It is a frontal view of a part of the compressed air jetting mechanism according to another embodiment of the present invention.
[FIG. 6] It is a cross-sectional view of X₂-X₂ in FIG. 4, showing a state in which compressed air is not supplied.
[FIG. 7] It is a cross-sectional view of X₂-X₂ in FIG. 4, showing a state in which the compressed air is supplied.
[FIG. 8] It is a frontal view of a compressed air jetting mechanism applied for the conduit according to another embodiment of the present invention.
[FIG. 9] It is a cross-sectional view taken along the line X₃-X₃ in FIG. 8 (a bowl body is a half section).
[FIG. 10] It is a plan view of a sedimentation basin provided with a compressed air jetting mechanism according to one embodiment of the present invention.
[FIG. 11] It is a cross-sectional view taken along the line X₄-X₄ in FIG. 10.
[FIG. 12] It is a cross-sectional view of a state in which an opening part of a pipe body provided in the sedimentation basin is positioned above a water surface.
[FIG. 13] It is an enlarged view of a part of a compressed air jetting mechanism provided at the pipe body in FIG. 12.
[FIG. 14] It is a cross-sectional view of a state in which the opening part of the pipe body provided in the sedimentation basin is positioned below the water surface.
[FIG. 15] It is an enlarged view of a part of a compressed air jetting mechanism provided at the pipe body in FIG. 14.

### DESCRIPTION OF EMBODIMENTS

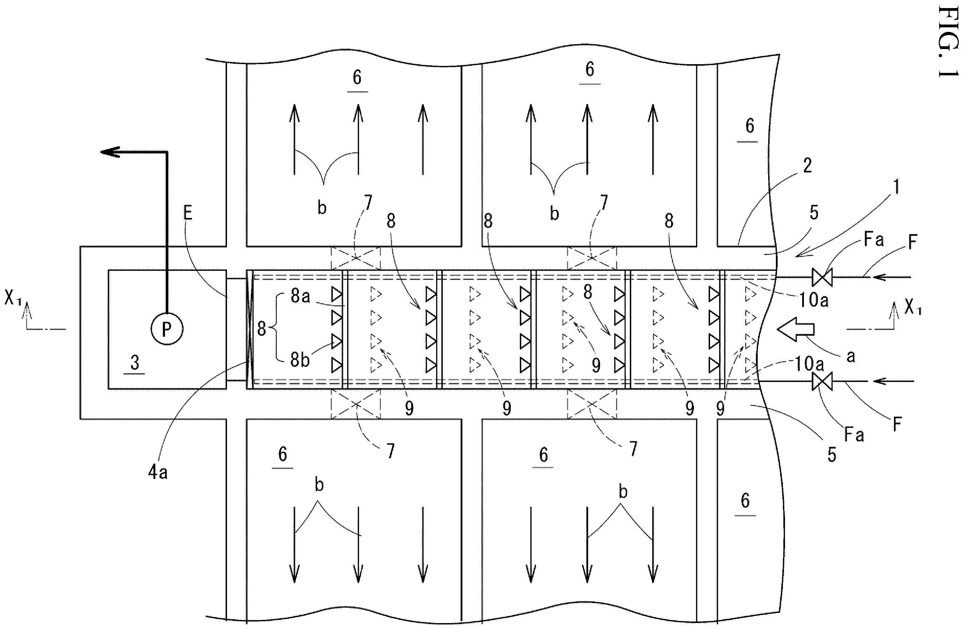

Before explaining a compressed air jetting mechanism (hereinafter, "jetting mechanism") according to one embodiment of the present invention, a conduit having the jetting mechanism is explained using FIG. 1 to FIG. 3.

A conduit 1 is provided with a conduit body 2 exhibiting a long waterway of an upper-opened type and a scum pit 3 receiving scum S floating in the conduit body 2; from one end side in a longitudinal direction of the conduit 2 (right-end side in the illustrated example), raw water of sewage is supplied (refer to an arrow "a").

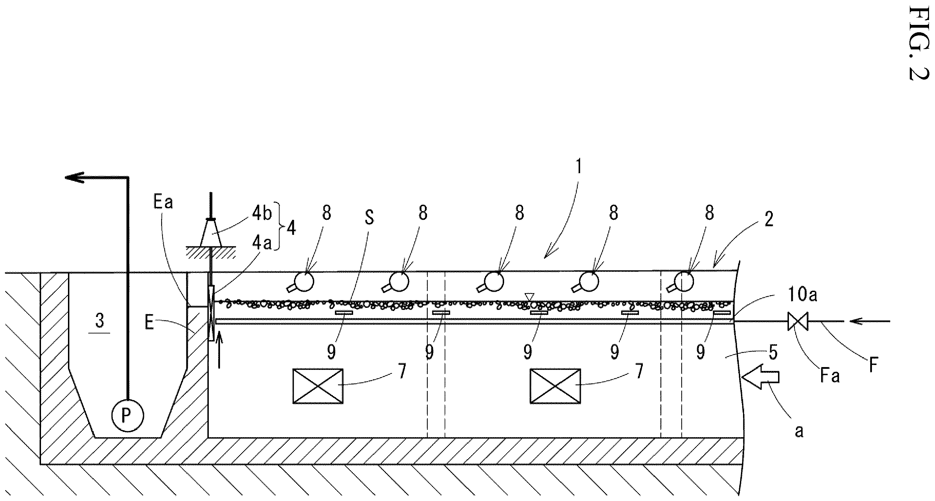

The scum pit 3 is provided at a terminal-end side (left-end side in the illustrated example) of a flow direction of the raw water in the conduit body 2; some walls forming the scum pit 3 is also used as a wall forming the terminal-end side of the conduit body 2 (this wall is denoted by a symbol E). A height of an upper surface Ea of the wall E is lower than the water surface in the conduit body 2 (refer to FIG. 2). At a side of the conduit body 2 of the wall E, a movable gate 4 is provided. The movable gate 4 can control the raw water flowing into the scum pit 3 from the conduit body 2.

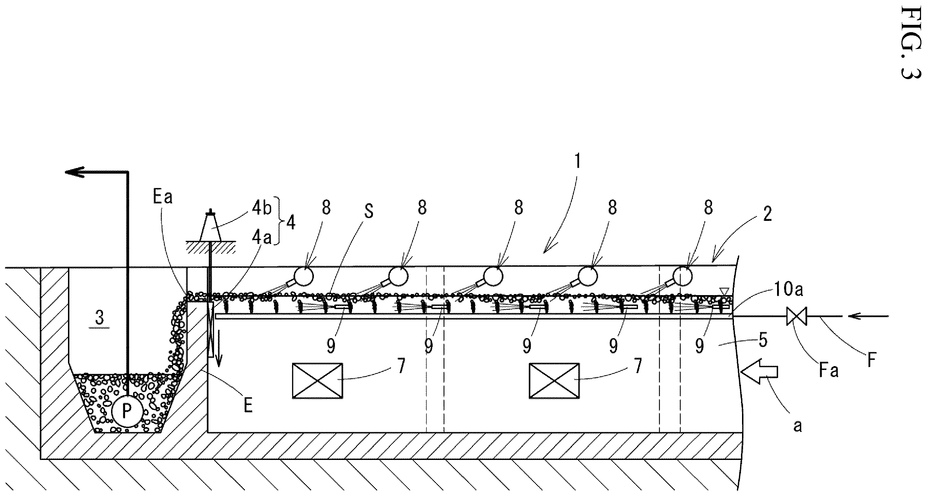

The movable gate 4 is provided with a gate plate 4a and a driving mechanism 4b (refer to FIG. 2); when the scum S is not discharged from the conduit body 2 to the scum pit 3, the gate plate 4a cuts off between an inside of the conduit body 2 and the scum pit 3 as shown in FIG. 2; and when the scum S is discharged from the conduit body 2 into the scum pit 3, the cut-off state by the gate plate 4a is cancelled as shown in FIG. 3. Accordingly, when the movable gate 4 is opened as shown in FIG. 3, a surface-layer water of the conduit body 2, i.e., the raw water containing the scum S can be discharged into the scum pit 3.

A width of the gate plate 4a is slightly smaller than a waterway width of the conduit body 2; and a height thereof is sufficiently larger than a difference between a position of the upper surface Ea of the wall E and the water surface position in the conduit body 2. A known vertical moving mechanism such as a system of a screw rod and a rotary nut, a system of rack-and-pinion, and the like is used for the driving mechanism 4b to move the gate plate 4a vertically.

Accordingly, when the scum S is not discharged, the driving mechanism 4b moves the gate plate 4a upward so that an upper end position of the gate plate 4a is sufficiently higher than the water surface position in the conduit body 2 as shown in FIG. 2 (in this state, a lower end of the gate plate 4a is disposed below the upper surface Ea of the wall E); and when the scum S is discharged, as shown in FIG. 3, the driving mechanism 4b moves the gate plate 4a downward so that the upper end position of the gate plate 4a is lower than the water surface position in the conduit body 2 and also slightly below than a bottom surface position of the scum layer S generated in the conduit body 2. As a result, the scum layer S in the conduit body 2 passes above the gate plate 4a and the wall E and flows out to the scum pit 3.

On the outside of both side walls 5 in the longitudinal direction of the long waterway forming the conduit body 2, as shown in FIG. 1, a plurality of sedimentation basins 6 corresponding to primary sedimentation basins of the sewage treatment plant are disposed side by side. A part of side walls of the sedimentation basins 6 is also used as the sided walls 5 of the conduit body 2. Inflow ports 7 on which an open/shut door (not illustrated) is attached on substantially a middle height position of the side walls 5 are provided. Accordingly, it is configured to communicate the inside of the conduit body 2 and the inside of the sedimentation basins 6 through the inflow ports 7. As a result, when the open/shut doors of the inflow ports 7 are opened, the raw water in the conduit body 2 flows into the sedimentation basins 6, and the raw water which flows in can flow in a direction leaving from the side walls 5 in the sedimentation basins 6 (refer to an arrow "b" in FIG. 1). In addition, although the sedimentation basins 6 are arranged outside of both side walls 5 of the conduit body 2in the illustrated example, they may be arranged outside of only one of the side walls 5.

On the conduit body 2, a plurality of over-water nozzles 8 having a water supply tube 8a and a nozzle 8b is provided. The over-water nozzles 8 are provided slightly upper than the water surface in the conduit body 2 with predetermined intervals along the water flow direction in the conduit body 2.

The water supply tubes 8a of the over-water nozzles 8 is provided between the side walls 5 of the conduit body 2 facing to each other orthogonally to the longitudinal direction of the conduit body 2. In other words, the water supply tubes 8a are provided along the orthogonal direction to the flow direction of the conduit body 2. These water supply tubes 8a are disposed at substantially a same height position above the water surface of the conduit body 2 in parallel to each other. To the water supply tubes 8a, water with a predetermined pressure is supplied via a pump which is not illustrated. In addition, for the water supplied to the water supply tube 8a, treated water of the sewage treatment plant can be used.

The nozzles 8b are provided with predetermined intervals in the longitudinal direction of the water supply tubes 8a to direct diagonally downward so that a tip-end opening thereof directs downward at a downstream side of the flow of the water in the conduit body 2. Accordingly, when pressure water is supplied to the water supply tubes 8a, jetting water is supplied from the nozzles 8b onto the scum S piled on the water surface of the conduit body 2, and the flow of the scum S that tends to flow toward the scum pit 3 can be promoted (refer to FIG. 3). In the present invention, the scum S which grows up to a certain thickness on the water surface may be called as "scum layer S".

Underwater nozzles 9 are provided in the conduit body 2. The underwater nozzles 9 are provided in the water slightly under the water surface in the conduit body 2 (position below the scum layer S) with predetermined intervals with each other in the flow direction of the water in the conduit body 2. A plurality (four in the illustrated example) of the underwater nozzles 9 are provided also along the orthogonal direction to the flow direction of the water in the conduit body 2 i.e., along a waterway width, with predetermined intervals with each other. That is, rows of the plurality of the underwater nozzles 9 arranged in rows along the waterway width direction (direction orthogonal to the flow direction of the conduit body 2) are arranged with predetermined intervals along the flow direction of the conduit body 2. An opening part of the underwater nozzles 9 is provided toward the scum pit 3 side.

The underwater nozzles 9 are held by a pressure water supply pipe which is not illustrated. For example, for the underwater nozzles 9, a jetting nozzle for a scum removal device suggested in Japanese Patent No. 5443260 and Japanese Patent Application No. 2019-150022 by the present Applicant. Accordingly, as in these suggested nozzles, the underwater nozzles 9 jet out the pressure water substantially horizontally from the opening part which opens toward the scum pit 3 side when the pressure water is supplied to the underwater nozzles 9 from the pressure water supply pipes to promote the flow of the scum S that tends to flow toward the scum pit 3 (refer to FIG. 3). On the underwater nozzles 9, as in the nozzles suggested above, a closing member which is opened by power of the pressure water and closes the opening part when the supply of the pressure water is stopped is provided, thereby having characteristic preventing damages of the inside of the underwater nozzles 9. Moreover, for the water supplied to the underwater nozzles 9, treated water of the sewage treatment plant can be used.

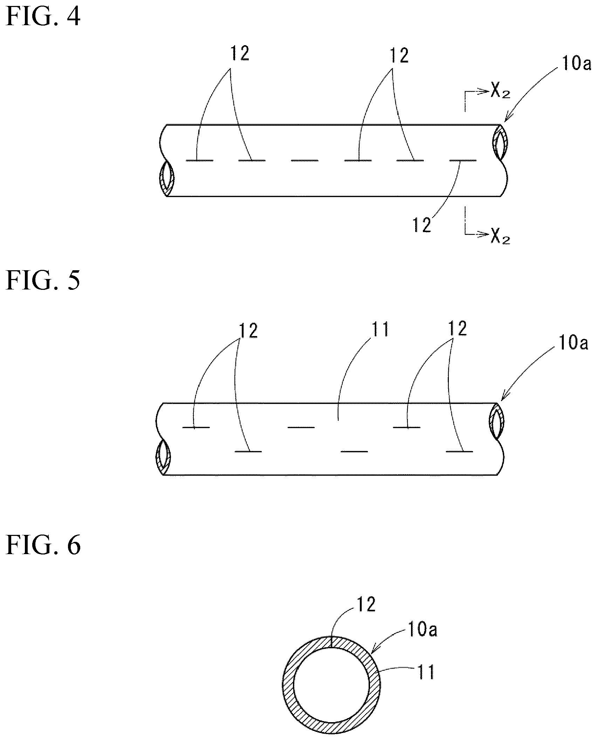

Next, jetting mechanisms 10a according to an embodiment of the present invention will be explained in detail referring FIG. 4 to FIG. 7.

The jetting mechanisms 10a have a rod shape as a whole, and are provided inside both side walls 5 of the conduit body 2 via a support device which is not illustrated (see FIG. 1 to FIG. 3). The installation position of the jetting mechanisms 10a is determined to be below the scum layer S generated in the conduit body 2. For example, when the scum S stays by driving the conduit 1 and grows nearly 10 cm in the thickness, in a case in which the scum S is discharged from the conduit body 2 into the scum pit 3, the jetting mechanisms 10a are installed to be slightly lower than 10 cm from the water surface.

The jetting mechanisms 10a have a pipe 11 made of an elastic material such as natural rubber, synthetic rubber or the like; and slits 12 are formed on the pipe 11. As the pipe 11 made of the elastic material, a commercially available rubber hose can also be used. The slits 12 are formed by a cutting process of penetrating the inner side and the outer side of a peripheral wall of the pipe 11.

The pipe 11 is provided along the side wall 5 inside both the side walls 5 of the conduit body 2, and one end side thereof is closed by a closing member which is not illustrated. The other end side thereof is connected to a compressed air supply system F via an open-close valve Fa; and when the open-close valve Fa is opened, predetermined pressure of air is supplied into the pipe 11.

As shown in FIG. 4, the slits 12 are provided at predetermined intervals with each other so that a longitudinal direction of the slits 12 coincides with the longitudinal direction of the pipe 11 and the slits 12 are aligned on a straight line in the longitudinal direction of the pipe 11.

Furthermore, as in a jetting mechanism 10b shown in FIG. 5, the arrangement state of the slits 12 can be provided so that the longitudinal direction of the slits 12 coincides with the longitudinal direction of the pipe 11 and the slits 12 form two rows along the longitudinal direction of the pipe 11. In a case in which the slits are provided in a plurality of rows as shown in FIG. 5, it is preferable that the slits 12 of the rows are provided alternately not to overlap with a circumference direction of the pipe 11 as shown in FIG. 5. In addition, the length, the direction, and the intervals of the slits 12 are not limited to the example shown in FIG. 4 and FIG. 5, the length, the direction, and the intervals may be adopted to maintain a predetermined strength of the pipe 11 even if the slits 12 are formed.

A relation of position of the slits 12 to the water surface when the jetting mechanisms 10a and 10b are installed on the conduit body 2 is appropriately selected in accordance with property and the like of the raw water flowed into the conduit body 2: the slits 12 may face the water surface side (upper side), face the counter side to the water surface (lower side), or face a parallel side to the water surface (lateral side). Since the compressed air that is emitted out from the slits 12 of the pipe 11 becomes bubbles and surfaces, the direction of the slits 12 may be any of the above-described directions if the scum adhered to the inner surface of the side walls 5 can be peeled off by the surfacing bubbles.

FIG. 6 shows a state in which the compressed air is not supplied to the jetting mechanism 10a, that is, a state in which the open-close valve F1 is closed and the compressed air is not supplied from the compressed air supply system F into the pipe 11. At this time, the slits 12 are maintained in a closed state by the elasticity of the pipe 11. Water pressure around the pipe 11 does not reach to push and open the slits 12. Accordingly, in a case of this state, the raw water does not flow into the pipe 11 via the slits 12.

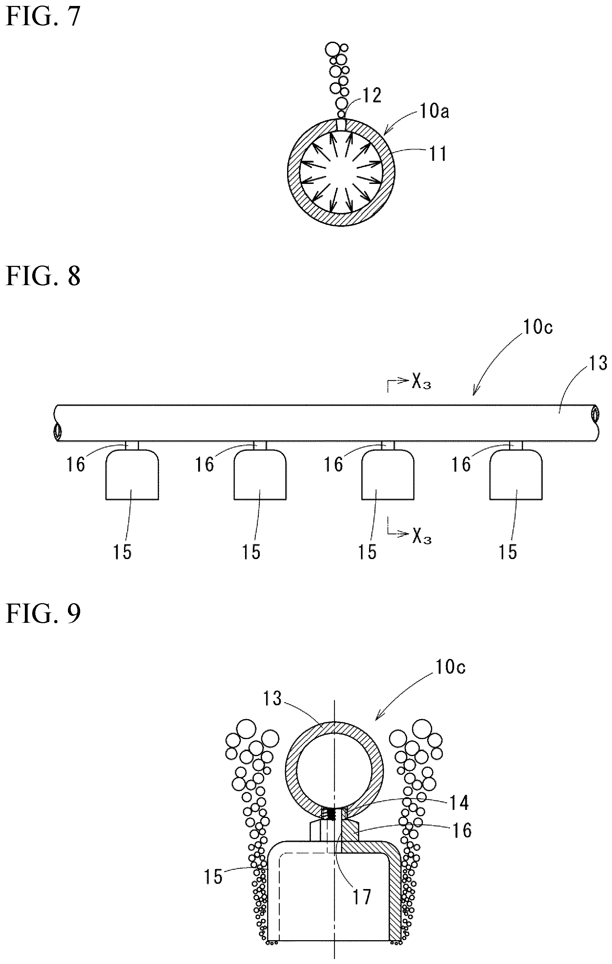

FIG. 7 shows a state in which the compressed air is supplied to the jetting mechanism 10a, that is, a state in which the open-close valve Fa is opened and the compressed air from the compressed air supply system F into the pipe 11. The pressure of the supplied compressed air acts to widen an inner diameter of the pipe 11 having the elasticity as shown by the arrow in the same drawing, so that the slits 12 are opened. Accordingly, the compressed air in the pipe 11 is discharged in the raw water as the bubbles via the slits 12 (see also FIG. 3).

Next, a scum discharge operation of the conduit 1 having the jetting mechanism 10a configured as described above will be explained.

As shown by the arrow "a" in FIG. 1 and FIG. 2, the raw water (sewage) flows into the conduit 1, and the raw water flows into the sedimentation basins 6 from the inflow ports 7; predetermined sedimentation treatment is performed in the sedimentation basins 6 (refer to FIG. 1). At this time, the movable gate 4 is closed (refer to FIG. 2). By closing the movable gate 4, the scum S starts gradually to accumulate on the water surface of the conduit body 2.

When the closing state of the movable gate 4 progresses for a predetermined time, the thickness of the scum layer S reaches a predetermined thickness, for example, nearly 10 cm. When the thickness of the scum layer S reaches the predetermined thickness, the compressed air is supplied from the compressed air supply system F to the jetting mechanism 10a (in the pipe 11). By the pressure of the supplied compressed air, the slits 12 provided on the pipe 11 are opened. As a result, the compressed air in the pipe 11 is discharged into the raw water via the slits 12 and becomes bubbles. Then, the discharged bubbles rise along a surface of the side walls 5 and peel the scum layer S adhered to the side walls 5 from the surface of the side walls 5.

Simultaneously or about the time of supplying the compressed air to the jetting mechanism 10a (in the pipe 11), the pressure water is supplied to the water supply tubes 8a of the over-water nozzles 8. Therefore, the jetting water jets out diagonally down ward as shown in FIG. 3 from the nozzles 8b to the scum layer S on the water surface of the conduit body 2 to advance the movement of the scum layer S to the scum pit 3 side. Moreover, when the pressure water is supplied to the underwater nozzles 9 from the pressure water supply pipe, the pressure water jets out from the opening parts which open toward the scum pit 3 side to advance the flow of the scum layer S flowing toward the scum pit 3. Furthermore, simultaneously or about the time of jetting out of the pressure water from the overwater nozzles 8 and the underwater nozzles 9, the movable gate 4 is opened with a slight delay to these operations. As a result, the scum layer S on the water surface of the conduit body 2 moves from the conduit body 2 into the scum pit 3, and the scum discharge is advanced (refer to FIG. 3). In addition, it can be started to supply the pressure water to the overwater nozzles 8 and the underwater nozzles 9 and to open the movable gate 4 in a state in which the peeling of the scum layer S (peeling from the side walls 5) by the jetting mechanism 10a is advanced to some degree.

When almost all the scum layer S on the water surface of the conduit body 2 moves into the scum pit 3, the compressed air is stopped to be supplied to the jetting mechanism 10a (in the pipe 11), the pressure water is stopped to be supplied to the water supply tube 8a of the overwater nozzles 8 and the underwater nozzles 9, and moreover the movable gate 4 is closed, so that a series of the scum discharge operation terminates (refer to FIG. 1). The scum S moved into the scum pit 3 is sent out to a scum treatment facility by a pump P and treated.

In the scum treatment described above, it is possible to automatically perform supply and stop of the compressed air to the jetting mechanism 10a, supply and stop of the pressure water to the overwater nozzles 8 (supply tube 8a) and the underwater nozzles 9, and further, open and close of the movable gate 4 by on and off of switches by a worker; and it is also possible to fully automate using a timer or detecting the thickness of the scum layer S.

In the above-described example, the flow of the scum is advanced by jetting the pressure water from both the overwater nozzles 8 and the underwater nozzles 9, and further, it may be only one of them. Moreover, it is possible to select appropriately with installing both. It is determined whether which nozzle is installed or both nozzles are installed in accordance with the property of the sewage flowed into the conduit. In any case, when both nozzles are installed, it is possible to obtain the effect of discharging rigidly grown-up scum.

FIG. 8 and FIG. 9 show a jetting mechanism 10c according to another embodiment of the present invention. The jetting mechanism 10c shown in FIG. 8 and FIG. 9 is provided with a steel pipe 13 made of a rigid material such as SUS for example and discharge port members 15. The steel pipe 13 is provided inside both side walls 5 of the conduit body 2 via a support device which is not illustrated, as in the jetting mechanisms 10a and 10b described above. As in the above-described jetting mechanisms 10a and 10b, in the jetting mechanism 10c, one end side of the steel pipe 13 is closed and the other end side is communicated to the compressed air supply system F.

In the steel pipe 13, a plurality of holes 14 in which a female screw is formed on a lower part in a longitudinal direction penetrate a circumference wall are provided at predetermined intervals along the longitudinal direction of the steel pipe 13. The discharge port members 15 are formed in a cup shape (a bowl shape, a hanging bell shape, or the like) as a whole; an opening part thereof faces downward; and an attachment part 16 having a male screw which can be screwed into the female screw of the holes 14 provided in the steel pipe 13 is provided. A penetrate hole 17 is provided in an axis part of the attachment part 16 in the discharge port member 15. Accordingly, when the discharge port members 15 are installed on the steel pipe 13 via the attachment part 16, the inside of the steel pipe 13 and the inside of the discharge port members 15 are communicated through the penetrate hole 17. The inside space of the discharge port member 15 is formed with a cross-sectional area that is sufficiently larger than the penetrate hole 17.

The jetting mechanism 10c is mounted inside both the side walls 5 of the conduit body 2; when the compressed air is supplied to the steel pipe 13, as shown in FIG. 9, bubbles are discharged from the opening part at the lower end of the discharge port member 15; the discharged bubbles rise along the surface of the side walls 5 to peel the scum layer S adhered to the side walls 5 off from the surface of the side walls 5. Moreover, when the compressed air is not supplied to the steel pipe 13, since the opening part of the discharge port member 15 is arranged downward and the volume of the inside space of the discharge port member 15 is large, a state in which the inside of the discharge port member 15 is filled with the air is maintained, and the penetrate hole 17 is not exposed to the raw water (sewage). Accordingly, clogging of the penetrate hole 17 can be effectively prevented.

In addition, in the above-described jetting mechanism 10c, the discharge port members 15 are installed on the steel pipe 13; but the jetting mechanism can be simplified by forming only the holes 14 on the steel pipe 13 without the discharge port members 15 to lower the cost. Because a water depth where the jetting mechanism is disposed in accordance with the scum layer S of about 10 cm; the water pressure to the holes 14 is not high and a diameter of the holes 14 is about several millimeters, so that the open-close valve Fa provided at the compressed air supply system F side is closed even when the compressed air is not supplied to the steel pipe 13, and the inside of the steel pipe 13 is maintained in a sealed condition. Accordingly, the raw water (sewage) does not easily enter the steel pipe 13 from the holes 14, and the clogging of the holes 14 does not easily occur. Accordingly, it is possible to omit the discharge port members 15. In any case, the jetting mechanism using the steel pipe 13 has an excellent characteristic in durability. When the discharge port members 15 are provided, since the cross-sectional area of the inner space of the discharge port members 15 is sufficiently larger than the penetrate hole 17, the clogging can be more reliably prevented.

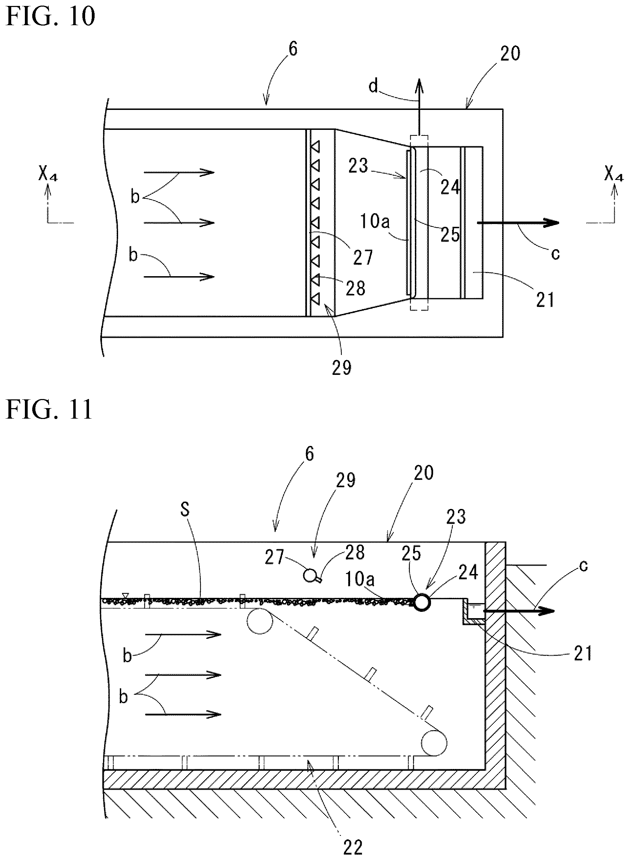

Next, using FIG. 10 to FIG. 15, a sedimentation basin in which the jetting mechanism 10a according to an embodiment of the present invention is adopt will be explained. The sedimentation basin corresponds to one of the plurality of the sedimentation basins 6 shown in FIG. 1, here, a part at the other side of the above-described conduit 1 side is shown.

In the sedimentation basins 6, as in known sedimentation basin, an overflow trough 21 and a sludge gathering mechanism 22 (refer to FIG. 11) are disposed in a sedimentation basin body 20 storing the raw water supplied from the conduit 1. The overflow trough 21 is provided at the terminal end side of the flow direction (refer to the arrow "b") of the raw water, that is, the other side to the conduit 1, to take the raw water which is subjected to the sedimentation treatment and send out to a next step of a reaction tank which is not illustrated. The sludge gathering mechanism 22 is configured to discharge the sludge (sediment) piled on the bottom part of the sedimentation basin 6 to a pit (not illustrated) which is provided at the conduit 1 side by a forward movement of a chain conveyor.

In the sedimentation basin 6, a pipe-type scum removing mechanism 23 having the jetting mechanism 10a which is described in detail using FIG. 4 to FIG. 7 is provided. The pipe-type scum removing mechanism 23 is provided at slightly upstream side (left side in the example shown in FIG. 10 and FIG. 11) than the installation position of the overflow trough 21 provided in the conduit body 20 to cross orthogonal to the flow direction of the raw water so that a part of the mechanism sinks under the water.

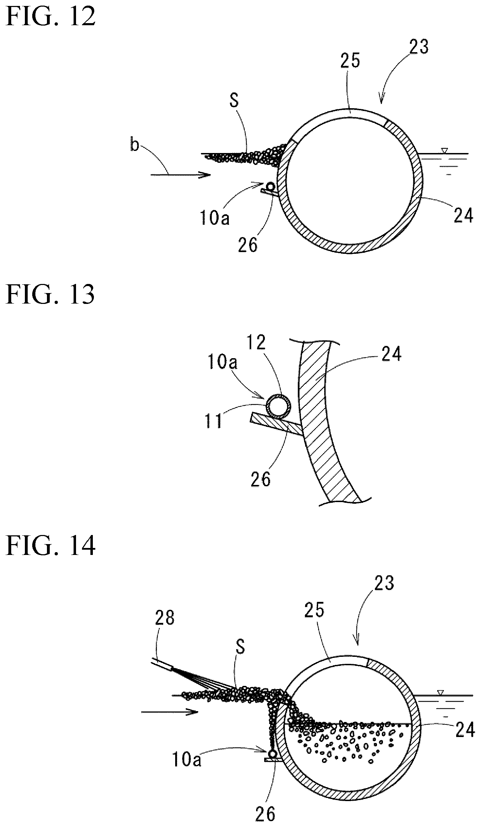

The pipe-type scum removing mechanism 23 has a pipe body 24with a predetermined thickness, and is provided so that an axis of the pipe body 24 substantially coincides with the water surface horizontally and crosses the sedimentation basin body 20. On a side part of the pipe body 24, a long and narrow opening part 25 along the axis direction is provided. A width of the opening part 25 is formed to be positioned above the water surface excepting during the scum is discharged, and a part thereof can sink under the water when the scum is discharged, by rotating the pipe body 24 about the axis at a predetermined angle (refer to FIG. 12 and FIG. 14). A length of the opening part 24 is set to substantially the same as the width of the sedimentation basin body 20. In addition, the pipe body 24 is usually called a pipe skimmer.

Both end sides of the longitudinal direction of the pipe body 24 are held respectively on both side walls forming the sedimentation basin body 20 rotatably and in a water-seal state. The pipe body 24 is configured so that the one end side in the longitudinal direction is opened, and the raw water containing the scum S at high concentration which is flowed into the pipe body 24 through the opening part 25 is delivered from the one end side to a drainage pit (not illustrated) and then sent out to a scum treatment facility such as a dehydrator and the like (refer to the arrow "d"). On the other, the pipe body 24 is configured so that the other end side is closed and connected to a rotation mechanism configured by including a motor and the like (not illustrated) to be reciprocating-rotated at a predetermined angle about the axis of the pipe body 24 (refer to FIG. 12 and FIG. 14).

The jetting mechanism 10a is provided outside the pipe body 24 by a support member 26 on a side part toward a direction in which the raw water flows. The installation height thereof is slightly lower than the position of the opening part 25 provided on the pipe body 24 and set to always be positioned under the generated scum layer S regardless of the angle position of the pipe body 24 rotating in a predetermined angle range, as shown in FIG. 12 and FIG. 14.

In the sedimentation basin body 20 of the sedimentation basin 6, a pressure water supply pipe 27 is provided above the water surface. The pressure water supply pipe 27 is provided above the water surface at the upstream side with a predetermined distance from the installation position of the pipe-type scum removing mechanism 23 between both side walls forming the sedimentation basin body 20 so that the axis direction thereof is parallel to the axis direction of the pipe body 24 of the pipe-type scum removing mechanism. Moreover, in the pressure water supply pipe 27, a plurality of nozzles 28 are provided at predetermined intervals along the longitudinal direction of the pressure water supply pipe 27 so that a tip end opening faces the downstream side (the pipe body 24 side) and slightly downward. An overwater nozzle 29 configured of the pressure water supply pipe 27 and the nozzles 28 has the same structure as in the overwater nozzle 8 shown in FIG. 1 to FIG. 3.

Water with a predetermined pressure is supplied to the pressure water supply pipe 27 of the overwater nozzle 29 by a pump (not illustrated). Accordingly, when the pressure water is supplied to the pressure water supply pipe 27, jetting water is supplied diagonally downward toward the scum layer S piled up on the water surface of the sedimentation basin body 20 from the nozzle 28, thereby promoting the flow of the scum S about to flow toward the pipe body 24 (refer to FIG. 14). In addition, treated water of the sewage treatment plant can be used for the water supplied to the pressure water supply pipe 27.

Next, a scum discharge operation of the sedimentation basin 6 configured as above will be explained.

At the time to discharge the scum S, for example, about one week has passed from the previous scum discharge, the pipe body 24 is rotated from a state in which the opening part 25 is disposed above the water surface as shown in FIG. 12, to the state shown in FIG. 14, so that a part of the opening part 25 is sank in the water. The time to sink in the water is for 10 minutes for example. Simultaneously with the rotation of the pipe body 24, the pressure water is jetted from the nozzle 28 of the pressure water supply pipe 27 of the overwater nozzle 29 onto the scum layer S. Accordingly, the scum layer S is further promoted to move toward the opening part 25 side of the pipe body 24 by a moving power of scum by the pressure water added to the scum movement by the water flow of the raw water in the sedimentation basin 6.

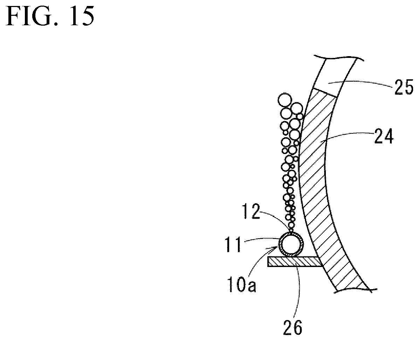

Moreover, at the same time as a part of the opening part 25 of the pipe body 24 is submerged in water, the compressed air is supplied to the pipe 11 of the jetting mechanism 10a, so that the slits 12 provided in the pipe 11 are opened to jet the air (refer to FIG. 14 and FIG. 15). The scum layer S in the vicinity of the opening part 25 of the pipe body 24 is lifted by the bubbles of the jetted air, and the lifted scum layer S passes over the end part of the opening part 25 and introduced into the pipe body 24. If the scum layer S enters once from the opening part 25 into the pipe body 24, the whole scum layer S continuously flows to be drawn into the pipe body 24; so that the scum layer S is smoothly introduced into the pipe body 24.

The introduction of the scum layer S to the opening part 25 by the air jetting of the jetting mechanism 10a is sufficient in an extremely short time (about 30 seconds); then the scum layer S is introduced into the pipe body 24 by the force of the flow continuously and smoothly.

In addition, the time of air jetting from the jetting mechanism may also be a time during a part of the opening part 25 of the pipe body 24 is submerged in water (for example, 10 minutes). However, it is substantiated that an initial short time when a part of the opening part 25 of the pipe body 24 is submerged is sufficient.

When the supply of the compressed air to the pipe 11 is stopped, the slits 12 provided in the pipe 11 is closed (refer to FIG. 12 and FIG. 13). Accordingly, it can be prevented to flow the raw water (wastewater) into the pipe 11.

After the scum S is taken into the pipe body 24 and removed from the water surface of the sedimentation basin 6, the pipe body 24 is rotated to the initial position, i.e., so that the opening part 25 of the pipe body 24 is positioned above the water surface (refer to FIG. 12 and FIG. 13) and the supply of the pressure water to the pressure water supply pipe 27 is stopped, and the series of the scum removing operation is expired.

The sedimentation basin 6 configured of the above-described structure can obtain an extremely excellent effect that an amount of water taken into the pipe body 24 for discharging the whole scum can be reduced to one-twenty to one-thirty of an amount of water generally operating only the jetting of the pressure water from the pressure water supply pipe 27 to discharge. Furthermore, the scum S taken in the pipe body 24 is sent to a scum treatment device (not illustrated) with a dehydrator and the like and treated; since an amount of water contained in the scum is extremely small in the scum treatment device, effects of reducing treatment cost and the like can be obtained.

As described above, the jetting mechanism, the conduit and the sedimentation basin according to the present invention are explained referring the drawings; a specific structure is not limited to the above-described embodiments and design changes and the like may be made without departing from the scope of the present invention. In the present invention, although the raw water is wastewater, the character thereof does not matter if the raw water contains the floating scum. Accordingly, it may be various industrial liquid waste and the like.

Although the examples of the jetting mechanisms are shown as 10a to 10c and the other example in which only holes are formed on the steel pipe is also explained, any of these jetting mechanisms may be selected in accordance with the installation position and surrounding conditions.

### Industrial Applicability

It is possible to smoothly remove scum in a conduit distributing and supplying raw water to a sedimentation basin provided in a sewage treatment plant and to automate it.

### Reference Signs List

- 1: Conduit
- 2: Conduit body
- 3: Scum pit
- E: Wall
- Ea: Upper surface
- 4: Movable gate
- 4a: Gate plate
- 4b: Driving mechanism
- 5: Side wall
- 6: Sedimentation basin
- 7: Inflow port
- 8: Over-water nozzle
- 8a: Water supply tube
- 8b: Nozzle
- 9: Underwater nozzle
- 10a to 10c: Compressed air jetting mechanism (Jetting mechanism)
- F: Compressed air supply system
- Fa: Open-close valve
- 11: Pipe
- 12: slit
- 13: Steel pipe
- 14: Hole
- 15: Discharge port member
- 16: Attachment part
- 17: Penetrate hole
- 20: Sedimentation basin body
- 21: Overflow trough
- 22: Sludge gathering mechanism
- 23: Pipe-type scum removing mechanism
- 24: Pipe body
- 25: Opening part
- 26: Support member
- 27: Pressure water supply pipe
- 28: Nozzle
- 29: Overwater nozzle
- S: Scum (Scum layer)
- P: Pump

## Claims

1. A compressed air jetting mechanism comprising
a pipe wherein a circumference wall is formed of an elastic material, having at least one slit penetrating the circumference wall, and disposed in water, and
a compressed air supply system connected to the pipe to supply compressed air having higher pressure than pressure in water where the pipe is provided into the pipe,
wherein the slit is closed when the pressure in the pipe is equal to or smaller than the water pressure, and opened when the compressed air is supplied to the pipe.

2. The compressed air jetting mechanism according to claim 1, wherein a plurality of the slits are provided at a predetermined intervals with each other in a longitudinal direction, so that the longitudinal direction thereof is parallel to a longitudinal direction of the pipe.

3. A conduit distributing and supplying raw water to a sedimentation basin provided with a sewage treatment plant, comprising
a conduit body into which the raw water flows, and a compressed air jetting mechanism which is provided along a longitudinal direction of the conduit body that is inside a side wall formed along the longitudinal direction of the conduit body, and below a scum layer occurred in the conduit body, wherein
the compressed air jetting mechanism is capable of jetting out compressed air from a plurality of points in the longitudinal direction into water.

4. The conduit according to claim 3, wherein the compressed air jetting mechanism comprises a pipe wherein a circumference wall is formed of an elastic material, having at least one slit penetrating the circumference wall, and a compressed air supply system connected to the pipe to supply compressed air having higher pressure than pressure in water where the pipe is provided into the pipe, and
wherein the slit is closed when the pressure in the pipe is equal to or smaller than the water pressure, and opened when the compressed air is supplied to the pipe.

5. The conduit according to claim 3, wherein in the compressed air jetting mechanism is provided with a pipe in which a circumference wall is formed of a rigid material, having at least one slit penetrating the circumference wall, and a compressed air supply system capable of supplying compressed air having higher pressure than pressure in water where the pipe is provided into pipe.

6. The conduit according to claim 5, wherein a plurality of the holes are provided at a predetermined intervals with each other in a longitudinal direction of the pipe.

7. The conduit according to claim 6, wherein
a discharge port member is provided at the hole, and
the discharge port member is formed in a cup shape and provided so that an opening part faces downward and the hole and an inner space of the discharge port member are communicated with each other.

8. The conduit according to any one of claims 3 to 6, provided with any one of an over-water nozzle jetting pressure water to an upper surface of the scum layer to advance a flow so that the scum layer goes toward a scum pit, or an underwater nozzle jetting pressure water in water to advance a flow so that the scum layer goes toward the scum pit, or provided with both the nozzles.

9. A sedimentation basin comprising a pipe-type scum removing mechanism provided at a sewage treatment plant, wherein
the pipe-system scum removing mechanism has a compressed air jetting mechanism on a wall surface of a pipe body at a side where the scum flows between wall surfaces forming an opening part when a part of the opening part provided on the pipe body is sank in water to remove the scum to jet out the air along the wall surface,
the compressed air jetting mechanism is provided with a pipe wherein a circumference wall is formed of an elastic material, having at least one slit penetrating the circumference wall, and a compressed air supply system connected to the pipe to supply compressed air having higher pressure than pressure in water where the pipe is provided into the pipe, and
the slit is closed when the pressure in the pipe is equal to or smaller than the water pressure, and opened when the compressed air is supplied to the pipe.
